# EUROPEAN PATENT SPECIFICATION

(11) **EP 3 600 126 B1**
(45) Date of publication and mention of the grant of the patent: **03.03.2021**
(21) Application number: 17724613.9
(22) Date of filing: 20.03.2017
(51) Int. Cl.: A61C 1/00

(54) **AIR POWERING UNIT WITH AUTOMATIC SUPPLY OF STERILE SOLUTION FOR SURGICAL VIBRATING HANDPIECES**
LUFTBETRIEBENE EINHEIT MIT AUTOMATISCHER ZUFUHR EINER STERILEN LÖSUNG FÜR CHIRURGISCHE VIBRIERENDE HANDSTÜCKE
UNITÉ D'ALIMENTATION EN AIR AVEC ALIMENTATION AUTOMATIQUE DE SOLUTION STÉRILE POUR PIÈCES À MAIN VIBRANTES CHIRURGICALES

(43) Date of publication of application: 05.02.2020
(73) Proprietor: Dupla S.r.l., 61122 Pesaro (PS) (IT)
(72) Inventor: AGABITI, Ivo, 61121 Pesaro (PS) (IT)
(74) Representative: Cacciamani, Clizia
(86) International application number: PCT/IB2017/000300
(87) International publication number: WO 2018/172807

(56) References cited:
- CN-Y- 2 688 249
- US-A- 4 973 247
- US-A- 5 261 816
- US-A- 5 700 147

## Description

### Field of the Invention

The present invention refers to the field of sterile solution automatic supply units for vibrating and rotating handpieces, for surgical use; in particular, the present invention refers to an air powering unit for the automatic supply of sterile solution to air handpieces in the dental and not dental field.

### State of the Art

Even today, after more than a century since its introduction, many dentists and oral surgeons use a typical location constituted by the so-called "dental unit", which represents the heart of the study, around which all the activities of the dentist or oral surgeon take place. The unit consists of a chair, on which the patient sits. The dental unit carrying on the various instruments, such as the electric rotary handpieces, ultrasonic vibrating handpieces, turbines and air/water syringes is disposed on the operator side.

The handpiece as a definition is a dynamic instrument, which is activated typically by an electric motor, an air motor or by a piezoelectric transducer, used in the dental field to operate cutters or vibrating tips, or interchangeable tools of various shapes and sizes that are inserted into the handpiece for its varied activities in dentistry and surgery. Said devices are usually cooled with a water flow coming from the not-sterile city water network.

In recent years, for industrial cost reduction needs, in the majority of dental units, the old pneumatic pedal controls of the air devices, such as turbines, have been replaced by an electric- pedal control, which activates a solenoid valve providing, upon its opening, a sudden and strong air pressure to the handpiece, without any possibility to modulate the air flow as it was in the previous case by using a pneumatic control. In the case of air vibrating handpieces, this fact produces a high mechanical shock to the inserts mounted on the handpieces, with the risk of breakage of the inserts themselves.

It should also to be noted that the air rotating instruments (turbines) for dental use are typically watered with a spray of air-water mixture from the city water network. These same tools are also used in the surgical field for example for teeth or roots separation during complex extractions, where the air-water mixture can produce a serious emphysema and embolism risk; therefore, a sterile irrigation would also be advisable Relevant prior art is exemplified by US 5 700 147 A and US 4 973 247 A.

Therefore, the Requester of the present patent application has found the need to realize a reliable and safe surgical use device, allowing a pressure adjustable driving air flow supply, in particular for such vibrating handpieces that are mounted in the same air device (tube) of the turbine, for their optimal performance and allowing at the same time the provision of the only sterile irrigant solution to cool the vibrating handpieces or the rotary milling in the case of turbines, i.e. without any air-liquid spray, and simultaneously activated with the same pedal activator that activates the handpieces.

### Summary of the Invention

An object of the present invention is therefore to provide an independent and fully pneumatic unit for surgical use, as an alternative to the piezoelectric devices, electric rotary or reciprocating handpieces for surgical use.

The present invention allows an optimal functioning of the air vibrating handpieces, including automatic dispensing of the sterile irrigant liquid, with even the possibility of a dental turbine utilization using a unit independent from the dental unit.

In a first aspect, the present invention refers to a surgical unit such as the one indicated in claim 1.

The present invention derives in fact from the general consideration that the above highlighted technical problems can be solved in an effective, reliable and secure way by using a compressed air powering, independent surgical unit, suitable for the automatic supply of a sterile solution to at least one vibrating handpiece or to a rotating turbine, wherein said surgical unit comprises:
- a central body;
- a compressed air conducting tube allowing air to flow from an external air source to said central body;
- an inflatable bag compression device adapted to compress a disposable bag, containing a sterile solution at its inside, thus allowing the evacuation of such a sterile solution from said disposable bag;
- an air hose allowing an adjusted low pressure and constant air to flow from said central body to said inflatable bag compression device for inflating said inflatable bag compression device;
- a support for holding said pressure bag compression device;
- a pedal activator for activating/deactivating an air flow;
- at least a first double pneumatic cord allowing the air incoming flow toward said pedal activator and the air coming back from it to said central body;
- a second pneumatic cord allowing the air flow from said central body to said vibrating handpiece or to said rotating turbine;
- a disposable sterile infusion tube allowing said sterile solution to flow from said disposable bag to said vibrating handpiece or to said rotating turbine;
wherein the air flow generated by the activation of said pedal activator simultaneously allows:
- delivering said sterile solution to said vibrating handpiece or to said rotating turbine, and
- activating said vibrating handpiece or said rotating turbine.

In this way, the air powering surgical unit of the present invention, through a simple quick coupling for the connection to an air source, is able to provide a sterile solution for the irrigation of the surgical tips of a surgical vibrating handpiece, or of the rotating cutters of a turbine, similar to a typical surgical unit provided with an electrically activated peristaltic pump.

In addition, with a simple foot pressure onto the pedal activator, it is possible to activate-deactivate, and also to adjust, the air flow directed to the surgical vibrating handpiece or rotating turbine and to simultaneously activate the irrigant sterile solution flow, in the same way as a typical electric peristaltic pump. In this way, thanks to the pedal activator, both the hands of the surgeon/dentist are released from this task.

According to a preferred embodiment, the air powering surgical unit of the present invention comprises a pneumatic actuator, such as a tube squeezing piston, able to pass from a first rest position, at a constant pressure, wherein said pneumatic actuator is able to squeeze a portion of said infusion tube so as to prevent said sterile solution to flow from said disposable bag to said surgical vibrating handpiece or to said rotating turbine, to a second position, upon activation of said pedal activator, wherein said pneumatic actuator releases said portion of the infusion tube so as to allow said sterile solution to flow from said disposable bag to said surgical vibrating handpiece or to said rotating turbine.

In this way, with no activation of the pedal activator, the constant air pressure allows the pneumatic actuator to tighten a portion of the infusion tube; vice versa, upon activation of the pedal activator, the generated pressure change allows the pneumatic actuator to be removed, thus releasing that portion of the infusion tube and consequently allowing the sterile solution to flow within that infusion tube.

According to a preferred embodiment, said bag is a plastic disposable bag, containing at its inside a sterile solution with which the inserts or the cutters mounted on the handpieces are cooled.

In this way, using a sterile solution it is possible to cool all the air dental handpieces, including turbines, instead of using a water flow resulting from the city water network, as it currently occurs for cooling the handpieces.

According to a preferred embodiment, said surgical vibrating handpiece is suitable for bone block harvesting, cyst excision, preparation of implant sites, extractions of impacted teeth, maxillary sinus lift by crestal or lateral access, corticotomy, osteotomy, osteoplasty, and the like.

In another embodiment, the air powering unit of the present invention is also suitable for the automatic supply of a sterile solution to at least one rotating turbine.

In this way, it is possible to activate the supply of the sterile irrigant solution to cool the rotating cutters (turbines).

According to a preferred embodiment, said surgical vibrating handpiece is easily removable and replaceable with another surgical vibrating handpiece or with a turbine.

According to a preferred embodiment, said surgical vibrating handpiece is provided with a 3 phases speed regulator, depending on the needs.

According to a preferred embodiment, said second pneumatic cord allowing the air flow from said central body to said vibrating surgical handpiece is about 1.5 meters long, so as to facilitate the handpiece orientation during surgery.

According to a preferred embodiment, said second pneumatic cord is removable and autoclavable.

In this way, unlike the typical dental units wherein the cords are fixed and not readily removable, it is possible to easily remove said second pneumatic cord and thus to solve its sterilization problem.

According to a preferred embodiment, said central body comprises an air pressure measuring device measuring the pressure of the air feeding said surgical vibrating handpiece and a related pressure adjusting device of such a feeding air.

In this way, the pressure of the air provided to the handpiece is adjusted before the incoming air enters the pneumatic cord toward the pedal activator and, upon activation by the pedal activator, coming then back from the pedal activator to the central unit to be then sent to said second pneumatic cord to the vibrating handpiece. This pressure adjustment device allows the maximum pressure to be determined according to the handpiece type and of the eventual insert mounted thereon. The pressure measuring device allows to constantly monitor the level of such a pressure while the surgical unit of the present invention is operating.

According to a preferred embodiment, said central body also comprises an air pressure controller of the air supplied to said central body from the outside.

In this way there is provided a further safety element to the surgical unit of the present invention in the case a too large differential pressure in the primary air supply occurs.

According to a preferred embodiment, said central body comprises an air pressure measuring device measuring the pressure of the air inflating said inflatable bag compression device and a related pressure adjusting device of such an inflating air.

In this way, it is possible to strictly control the pressure with which the disposable sterile solution bag is subjected to compression; the pressure is thus determined by the user, which is allowed to vary it from time to time by acting on the related pressure adjusting device.

According to a preferred embodiment, said inflatable bag compression device is inflated at a low pressure, for example in the range of 0.5-0.8 bar, in an automatic and continuous manner.

According to a preferred embodiment, said inflatable bag compression device is provided with a safety valve which avoids a threshold value related to the inflatable bag bursting risk is overcome.

In this way, keeping the pressure at a constant value, a constant flow of sterile solution is provided, without the need to continuously pump air, as required in manual systems instead.

According to a preferred embodiment, said inflatable bag compression device is formed by high-frequency welding two polyurethane foils.

According to a preferred embodiment, said inflatable bag compression device is made in partly transparent fabric.

In this way it is possible to verify the amount of the sterile solution still present inside the bag.

According to a preferred embodiment, said support for the inflatable bag compression device has an inverted "U" shape, whose two lower ends engage with two corresponding elements of the central body for the attachment thereto.

According to a preferred embodiment, said inflatable bag compression device is fixed to said support so as to be hung to it, for example through a slot disposed in the upper portion of the support itself.

According to a preferred embodiment, said inflatable bag compression device is provided with a rigid wall to increase the effectiveness of the compression onto the bag and to prevent its excessive deformation.

In this way, being flat said rigid wall, the inflatable bag compression device is prevented to roll and is allowed to operate even when laid on a plane.

According to a preferred embodiment, the surgical air powering unit of the present invention is portable.

In this way, such surgical air powering unit can be easily carried and quickly connected to a compressed air source without the need of connecting it to a fixed dental unit.

### Brief Description of the Drawings

Further characteristics and advantages of the present invention will become more apparent from an examination of the following detailed description of a preferred embodiment, but not exclusive, illustrated by way of non limiting example with the support of the accompanying drawings, wherein:
- Figure 1 is a front axonometric view of an embodiment of the surgical air powering unit of the present invention;
- Figure 2 is a rear view of the surgical air powering unit shown in Figure 1;
- Figure 3 shows a detail of the central body of surgical air powering unit shown in Figure 1.

### Detailed Description

The following detailed description refers to a particular embodiment of a surgical air powering unit 1 of the present invention. The various elements constituting the unit 1 of the present invention are not necessarily shown to scale, but some of them may be larger or smaller than the reality for a better graphical representation.

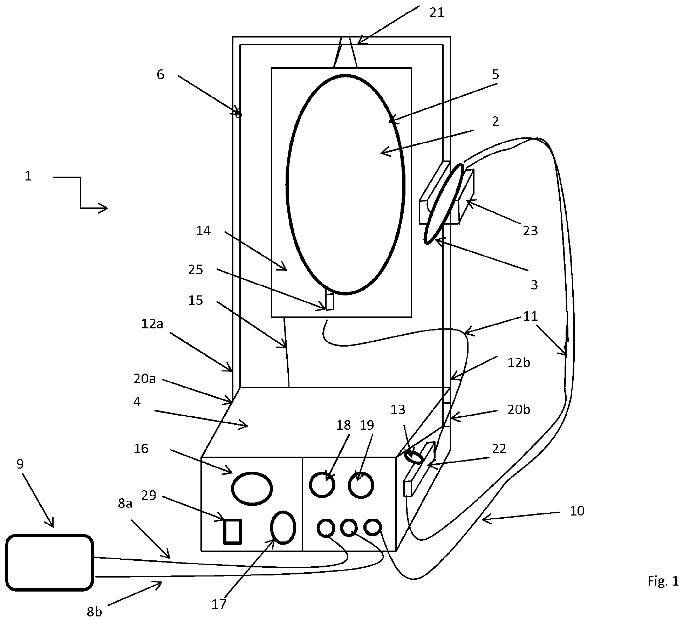

With particular reference to Figures 1-3 a substantially shaped box central body 4 is shown, to which the support 6 for the bag 5 containing an irrigant sterile solution 2 is fixed. The support 6 has an inverted "U" shape, whose two lower ends 12a, 12b engage with corresponding elements 20a, 20b of the central body 4, arranged one on each related side, at the edges of the rear side of the box-shaped central body 4, for fastening the support 6 thereto.

The bag 5 is contained in an inflatable bag compression device 14, able to compress the bag 5 for dispensing the sterile solution 2 contained therein. The inflatable bag compression device 14 is anchored in a removable manner to the support 6 through a slot 21.

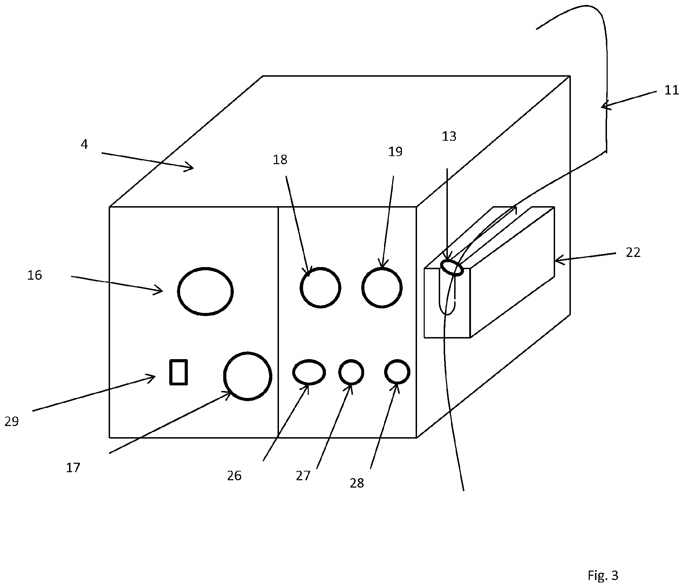

A (disposable sterile) infusion tube 11 protrudes from the bag 5 allowing, when required, the flow of the sterile solution 2 from the bag 5 to the handpiece 3. The infusion tube 11, after being passed through an appropriate channel 22 disposed on a side of the central body 4 (best shown in Figure 3), reaches the handpiece 3 which, in the rest position, is rested on a support 23, from which it is easily removable at the moment of its use. A pneumatic actuator 13, such as a mechanical tube squeezing piston 13, is arranged at such channel 22 (Figure 3); according to the pressure supplied to the pneumatic actuator 13, it squeezes or releases the infusion tube 11 for, respectively, preventing or allowing the passage therein of a sterile solution 2 from the bag 5.

Two pneumatic cords 8a, 8b, visible on the front part of the central body 4, respectively allow the incoming air flow from the central body 4 to the pedal activator 9 (via the pneumatic cord 8a) and the coming back air flow from the pedal activator 9 to the central body 4 (via the pneumatic cord 8b). Furthermore, a pneumatic cord 10 is also visible allowing the air flow from the central body 4 to the handpiece 3. A pressure gauge 16 measuring the air pressure that inflates the inflatable bag compression device 14, a pressure gauge 18 measuring the pressure air that feeds the handpiece 3, and the corresponding knobs 17 and 19 for the related pressure adjustments, are also visible.

In the embodiment shown in Figures 1 and 3 a device 29 for manually opening/closing the pneumatic actuator 13 is also visible, for use in case of insertion/removal of the infusion tube into the tube squeezing piston.

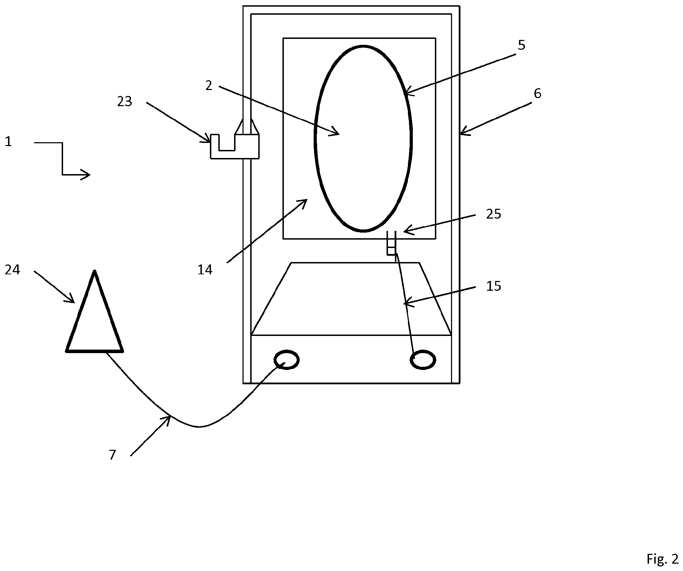

In Figure 2 a rear view of the device of the present invention is shown, wherein an air conducting tube 7 allowing an air flow from an outside air source 24 to the central body 4, and an air conducting tube 15 allowing an air flow from the central body 4 to the inflatable bag compression device 14 through a nozzle 25 positioned onto the inflatable bag compression device 14, are also visible. In Figure 2, the support 23 for the handpiece 3 is shown (the handpiece in this Figure 2 has not been shown for simplicity of realization).

The surgical air powering unit appears to be of reduced size and weight, and therefore easily transportable.

Operationally, firstly, an external air source 24 is connected to the central body 4 of the unit 1 of the present invention through the air conducting tube 7. In this way, it is possible to provide air at a predetermined pressure from the central body 4 to the pedal activator 9 (via the pneumatic cord 8a), to the handpiece 3 (through the pneumatic cord 10), and to the inflatable bag compression device 14 (via the air conductor 15 and the nozzle 25).

In rest condition, the handpiece 3 is resting on the support 23 and the tube squeezing piston 13 tightens a portion of the infusion tube 11 into the channel 22 so as to prevent the sterile solution 2 to flow from the bag 5 to the handpiece 3.

At use time, the handpiece 3 is gripped by the user and removed from the support 23; the pedal activator 9 is activated by the user's foot thus determining a coming back air passage into the other pneumatic cords 8b, which in turn determines the release of the tube squeezing piston 13, which loosens its grip on the infusion tube 11 into the channel 22, thus allowing the sterile solution 2 to flow from the bag 5 to the handpiece 3 and, simultaneously, allowing an airflow increase, adjustable depending on the thrust on said pedal 9, from the central body 4 to the handpiece 3 via the pneumatic cord 10, thereby activating the handpiece 3.

In this way the device of the present invention works exclusively with air without any use of electric current. In addition, with the simple activation of the pedal activator 9, the irrigant sterile solution 2 and the air to the handpiece 3 supplies are simultaneously activated for the proper working of the surgical air powering unit.

Of course, to those skilled in the art many modifications and variations of the above described preferred embodiment will be evident, still remaining within the scope of the invention.

Accordingly, the present invention is not limited to the above described preferred embodiment, illustrated only by way of example and not limitative, but is defined by the following claims.

## Claims

1. Compressed air powering unit (1) adapted to automatic supply a sterile solution (2) to at least a vibrating handpiece (3) or to a rotating turbine (3), wherein said air powering unit (1) comprises:
- a central body (4);
- a compressed air conducting tube (7) allowing air to flow from an outside air source (24) to said central body (4);
- an inflatable bag compression device (14) adapted to compress a disposable bag (5), containing a sterile solution (2) at its inside, thus allowing the evacuation of such a sterile solution (2) from said disposable bag (5);
- an air hose (15) allowing an adjusted low pressure and constant air to flow from said central body (4) to said inflatable bag compression device (14) for inflating said inflatable bag compression device (14);
- a support (6) for holding said inflatable bag compression device (14);
- a pedal activator (9) for activating/deactivating an air flow **characterized in that** the compressed air powering unit further comprises:
- at least a first double pneumatic cord (8a, 8b) allowing the air incoming flow (8a) toward said pedal activator (9) and the air coming back (8b) from it to said central body (4);
- a second pneumatic cord (10) allowing the air flow from said central body (4) to said vibrating handpiece (3) or to said rotating turbine (3);
- a disposable sterile infusion tube (11) allowing said sterile solution (2) to flow from said disposable bag (5) to said vibrating handpiece (3) or to said rotating turbine (3);
wherein the air flow generated by the activation of said pedal activator (9) simultaneously allows:
- delivering said sterile solution (2) to said vibrating handpiece (3) or to said rotating turbine (3), and
- activating said vibrating handpiece (3) or said rotating turbine (3).

2. Air powering unit (1) according to claim 1, which further comprises a pneumatic actuator (13) able to pass from a first constant pressure rest position wherein said pneumatic actuator (13) tightens a portion of said infusion tube (11) so as to prevent said sterile solution (2) to flow from said disposable bag (5) to said vibrating handpiece (3) or to said rotating turbine (3), to a second position wherein, upon activation of said pedal activator (9), said pneumatic actuator (13) releases said portion of the infusion tube (11) so as to allow said sterile solution (2) to flow from said disposable bag (5) to said vibrating handpiece (3) or to said rotating turbine (3).

3. Air powering unit (1) according to any one of the preceding claims, wherein said vibrating handpiece (3) is a vibrating surgical handpiece for dental use, cysts excision, implant site preparation, teeth extraction, maxillary sinus lift by crestal or lateral access, corticotomy, osteotomy, osteoplasty.

4. Air powering unit (1) according to any one of the preceding claims, wherein said vibrating handpiece or turbine (3) is easily removable and replaceable with another vibrating handpiece or turbine (3).

5. Air powering unit (1) according to any one of the preceding claims, wherein said vibrating handpiece (3) is provided with a three-phase speed controller.

6. Air powering unit (1) according to any one of the preceding claims, wherein said central body (4) comprises a device for measuring the air pressure (16) inflating said inflatable bag compression device (14) and a related pressure adjusting device (17) of such an inflating air.

7. Air powering unit (1) according to any one of the preceding claims, wherein said inflatable bag compression device (14) is inflated to a pressure in the range of 0.5-0.8 bar, in an automatic and continuous manner.

8. Air powering unit (1) according to anyone of the preceding claims, wherein said second pneumatic cord (10) allowing air to flow from said central body (4) to said vibrating handpiece (3) or to said turbine rotary (3) is removable and autoclavable.

9. Air powering unit (1) according to any one of the preceding claims, wherein said central body (4) comprises an air pressure measuring device (18) that measures the pressure of the air feeding said vibrating handpiece (3) or said rotating turbine (3) and a related pressure adjusting device (19) of such a feeding air.

10. Air powering unit (1) according to any one of the preceding claims, wherein said support (6) has an inverted "U" shape-like, whose two ends (12a, 12b) engage two corresponding elements (20a, 20b) of the central body (4) for fixing thereon.

11. Air powering unit (1) according to any one of the preceding claims, wherein said unit (1) is portable.

## Patentansprüche

1. Druckluftaggregat (1), das für die automatische Zufuhr einer sterilen Lösung (2) zu mindestens einem vibrierenden Handstück (3) oder zu einer rotierenden Turbine (3) geeignet ist, wobei besagtes Luftaggregat (1) folgendes umfasst:
- einen zentralen Körper (4);
- ein Druckluft-Leitungsrohr (7), das das Strömen von Luft von einer Außenluftquelle (24) zu besagtem zentralen Körper erlaubt (4);
- ein aufblasbares Beutelkompressionsgerät (14), das geeignet ist, einen Einwegbeutel (5), der eine sterile Lösung (2) enthält, zu komprimieren. Auf diese Weise wird die Evakuierung einer solchen sterilen Lösung (2) aus besagtem Einwegbeutel (5) erlaubt;
- einen Luftschlauch (15), der einen eingestellten niedrigen Druck und den Strom konstanter Luft vom besagten zentralen Körper (4) zu besagtem aufblasbaren Beutelkompressionsgerät (14) erlaubt, um besagtes aufblasbares Beutelkompressionsgerät (14) aufzublasen;
- eine Halterung (6), zum Halten des besagten aufblasbaren Beutelkompressionsgeräts (14);
- eine Pedalaktivierung (9) zur Aktivierung/Deaktivierung eines Luftflusses, die sich dadurch auszeichnet, dass das Druckluftaggregat weiter folgendes umfasst:
- mindestens ein erstes doppeltes Pneumatikkabel (8a, 8b), das den einströmenden Luftstrom (8a) zur Pedalaktivierung (9) und das Zurückströmen der Luft (8b) zum besagten zentralen Körper (4) erlaubt;
- ein zweites Pneumatikkabel (10), das den Luftstrom von besagtem zentralen Körper (4) zu besagtem vibrierenden Handstück (3) oder zur besagten rotierenden Turbine (3) erlaubt;
- einen sterilen Einweg-Infusionsschlauch (11), der den Strom der besagten sterilen Lösung (2) von besagtem Einwegbeutel (5) zu besagtem vibrierenden Handstück (3) oder zur besagten rotierenden Turbine (3) erlaubt;
wobei der durch die Aktivierung der besagten Pedalaktivierung (9) erzeugte Luftstrom gleichzeitig folgendes erlaubt:
- Zuführung der besagten sterilen Lösung (2) zu besagtem vibrierenden Handstück (3) oder zur besagten rotierenden Turbine (3), und
- Aktivierung des besagten vibrierenden Handstücks (3) oder der besagten rotierenden Turbine (3).

2. Druckluftaggregat (1) gemäß Anspruch 1, das weiter einen pneumatischen Aktuator (13) umfasst, der in der Lage ist, von einer ersten Ruheposition mit konstantem Druck, wobei besagter pneumatischen Aktuator (13) einen Teil des besagten Infusionsschlauch (11) spannt, um zu verhindern, dass die besagte sterile Lösung (2) vom besagten Einwegbeutel (5) zu besagtem vibrierenden Handstück (3) oder zur besagten rotierenden Turbine (3) strömt, in eine zweite Position zu passieren, wobei bei Aktivierung der besagten Pedalaktivierung (9) besagter pneumatischer Aktuator (13) den besagten Teil des Infusionsschlauch (11) freigibt, so dass der Strom der sterilen Lösung (2) von besagtem Einwegbeutel (5) zu besagtem vibrierenden Handstück (3) oder zur besagten rotierenden Turbine (3) ermöglicht wird.

3. Druckluftaggregat (1) gemäß einem der vorhergehenden Ansprüche, wobei besagtes vibrierendes Handstück (3) ein vibrierendes chirurgisches Handstück für zahnärztliche Zwecke, Zystenentfernung, Vorbereitung der Implantatstellen, Zahnextraktion, Kieferhöhlenlift durch krestalen oder lateralen Zugang, Kortikotomie, Osteotomie, Osteoplastik ist.

4. Druckluftaggregat (1) gemäß einem der vorhergehenden Ansprüche, wobei besagtes vibrierendes Handstück oder Turbine (3) leicht entfernbar und durch ein anderes vibrierendes Handstück oder Turbine austauschbar ist (3).

5. Druckluftaggregat (1) gemäß einem der vorhergehenden Ansprüche, wobei besagtes vibrierendes Handstück (3) mit einem dreiphasigen Drehzahlregler ausgestattet ist.

6. Druckluftaggregat (1) gemäß einem der vorhergehenden Ansprüche, wobei besagter zentraler Körper (4) eine Vorrichtung zum Messen des Luftdrucks (16), der besagtes aufblasbares Beutelkompressionsgerät (14) aufbläst und ein entsprechendes Druckeinstellungsgerät (17) einer solchen Aufblasluft umfasst.

7. Druckluftaggregat (1) gemäß einem der vorhergehenden Ansprüche, wobei besagtes aufblasbares Beutelkompressionsgerät (14) automatisch und kontinuierlich auf einen Druck im Bereich zwischen 0.5-0.8 bar aufgeblasen wird.

8. Druckluftaggregat (1) gemäß einem der vorhergehenden Ansprüche, wobei besagtes Pneumatikkabel (10), das den Strom von Luft von besagtem zentralen Körper (4) zu besagtem vibrierenden Handstück (3) oder zur besagten rotierenden Turbine (3) erlaubt, entfernbar und autoklavierbar ist.

9. Druckluftaggregat (1) gemäß einem der vorhergehenden Ansprüche, wobei besagter zentraler Körper (4) eine Luftdruckmessvorrichtung (18), die den Druck der Luft, die das besagte vibrierende Handstück (3) oder die besagte rotierende Turbine (3) speist, misst und ein entsprechendes Druckeinstellungsgerät (19) einer solchen Zufuhrluft umfasst.

10. Druckluftaggregat (1) gemäß einem der vorhergehenden Ansprüche, wobei besagte Halterung (6) eine umgekehrte "U"-Form aufweist, deren beiden Enden (12a, 12b) zwei korrespondierende Elemente (20a, 20b) des zentralen Körpers (4) zur Befestigung beteiligen.

11. Druckluftaggregat (1) gemäß einem der vorhergehenden Ansprüche, wobei besagte Einheit (1) tragbar ist.

## Revendications

1. Unité d'alimentation en air comprimé (1) conçue pour fournir automatiquement une solution stérile (2) à au moins une pièce à main vibrante (3) ou à une turbine rotative (3), dans laquelle ladite unité d'alimentation en air (1) comprend :
- un corps central (4) ;
- un tube conducteur d'air comprimé (7) permettant à l'air de circuler depuis une source d'air extérieure (24) vers ledit corps central (4) ;
- un dispositif de compression de sac gonflable (14) conçu pour comprimer un sac jetable (5), contenant une solution stérile (2) à l'intérieur de celui-ci, permettant ainsi l'évacuation d'une telle solution stérile (2) dudit sac jetable (5) ;
- un tuyau d'air (15) assurant une basse pression ajustée et permettant à de l'air constant de circuler dudit corps central (4) vers ledit dispositif de compression de sac gonflable (14) pour gonfler ledit dispositif de compression de sac gonflable (14) ;
- un support (6) pour maintenir ledit dispositif de compression de sac gonflable (14) ;
- un activateur à pédale (9) pour activer/désactiver le flux d'air, **caractérisé en ce que** l'unité d'alimentation en air comprimé comprend également :
- au moins un premier double câble pneumatique (8a, 8b) assurant le flux d'air entrant (8a) vers ledit activateur à pédale (9) et l'air revenant (8b) de celui-ci vers ledit corps central (4) ;
- un second câble pneumatique (10) permettant le flux d'air dudit corps central (4) vers ladite pièce à main vibrante (3) ou vers ladite turbine rotative (3) ;
- un tube de perfusion stérile jetable (11) permettant à ladite solution stérile (2) de circuler dudit sachet jetable (5) vers ladite pièce à main vibrante (3) ou vers ladite turbine rotative (3) ;
où le flux d'air généré par l'activation dudit activateur à pédale (9) permet simultanément :
- de délivrer ladite solution stérile (2) à ladite pièce à main vibrante (3) ou à ladite turbine rotative (3), et
- d'activer ladite pièce à main vibrante (3) ou ladite turbine rotative (3).

2. Unité d'alimentation en air (1) selon la revendication 1, qui comprend également un actionneur pneumatique (13) capable de passer d'une première position de repos à pression constante dans laquelle ledit actionneur pneumatique (13) serre une partie dudit tube de perfusion (11) de manière à empêcher ladite solution stérile (2) de circuler dudit sac jetable (5) vers ladite pièce à main vibrante (3) ou vers ladite turbine rotative (3), à une seconde position dans laquelle, lors de l'activation dudit activateur à pédale (9), ledit actionneur pneumatique (13) libère ladite partie du tube de perfusion (11) de manière à permettre à ladite solution stérile (2) de circuler dudit sachet jetable (5) vers ladite pièce à main vibrante (3) ou vers ladite turbine rotative (3).

3. Unité d'alimentation en air (1) selon l'une quelconque des revendications précédentes, dans laquelle ladite pièce à main vibrante (3) est une pièce à main chirurgicale vibrante à usage dentaire, pour l'excision de kystes, la préparation du site d'implant, l'extraction de dents, l'élévation du sinus maxillaire par voie crestale ou latérale, la corticotomie, l'ostéotomie ou l'ostéoplastie.

4. Unité d'alimentation en air (1) selon l'une quelconque des revendications précédentes, dans laquelle ladite pièce à main vibrante ou turbine (3) est facilement amovible et remplaçable par une autre pièce à main vibrante ou turbine (3).

5. Unité d'alimentation en air (1) selon l'une quelconque des revendications précédentes, dans laquelle ladite pièce à main vibrante (3) est munie d'un régulateur de vitesse triphasé.

6. Unité d'alimentation en air (1) selon l'une quelconque des revendications précédentes, dans laquelle ledit corps central (4) comprend un dispositif pour mesurer la pression d'air (16) gonflant ledit dispositif de compression de sac gonflable (14) et un dispositif de réglage de la pression (17) lié à cet air de gonflage.

7. Unité d'alimentation en air (1) selon l'une quelconque des revendications précédentes, dans laquelle ledit dispositif de compression de sac gonflable (14) est gonflé à une pression comprise entre 0,5 et 0,8 bar, de manière automatique et continue.

8. Unité d'alimentation en air (1) selon l'une quelconque des revendications précédentes, dans laquelle ledit second câble pneumatique (10) permettant à l'air de circuler dudit corps central (4) vers ladite pièce à main vibrante (3) ou vers ladite turbine rotative (3) est amovible et autoclavable.

9. Unité d'alimentation en air (1) selon l'une quelconque des revendications précédentes, dans laquelle ledit corps central (4) comprend un dispositif de mesure de la pression de l'air (18) qui mesure la pression de l'air alimentant ladite pièce à main vibrante (3) ou ladite turbine rotative (3) et un dispositif de réglage de la pression (19) lié à cette alimentation d'air.

10. Unité d'alimentation en air (1) selon l'une quelconque des revendications précédentes, dans laquelle ledit support (6) a une forme de "U" inversé, dont les deux extrémités (12a, 12b) s'engagent dans deux éléments correspondants (20a, 20b) du corps central (4) pour y être fixées.

11. Unité d'alimentation en air (1) selon l'une quelconque des revendications précédentes, dans laquelle ladite unité (1) est portable.
